# EUROPÄISCHE PATENTANMELDUNG

(11) **EP 1 319 943 A2**
(43) Veröffentlichungstag der Anmeldung: **18.06.2003**
(21) Anmeldenummer: 02027006.2
(22) Anmeldetag: 03.12.2002
(51) Int. Cl.: G01N 27/22

(54) **Impedanz-Sensor für Analyte in flüssiger Lösung**

(30) Priorität: 14.12.2001 DE 10161447
(71) Anmelder: Stiftung Caesar Center of Advanced European Studies and Research, 53111 Bonn (DE)
(72) Erfinder: Löhndorf, Markus, Dr., 53113 Bonn (DE); Quandt, Eckhard, Dr., 53177 Bonn (DE); Tewes, Michael, Dr., 50354 Hürth (DE)
(74) Vertreter: Schrooten, Rolf, Dipl.-Ing.

(57) **Zusammenfassung**

Verfahren zur Herstellung eines impedometrischen Sensors mit zwei beabstandeten insbesondere flächigen Leitern 2, 4, wobei in einen Meßraum 9 zwischen die Leiter 2, 4 ein zu untersuchender insbesondere in flüssiger Lösung befindlicher Analyt einbringbar ist, der die Impedanz des Sensors verändert, aufweisend folgende Verfahrenschritte:
der erste Leiter 2 wird mit einer Isolierschicht 3 bedeckt,
die Isolierschicht 3 wird mit dem zweiten Leiter 4 bedeckt und
die Isolierschicht 3 wird durch Zerstörung teilweise abgetragen, wobei ein oder mehrere Meßräume 9 zwischen den Leitern 2, 4 entstehen und wobei die verbleibenden Bereiche der Isolieschicht 3 einen Distanzhalter 8 für die Leiter 2, 4 bilden.

## Beschreibung

Die vorliegende Erfindung betrifft ein Verfahren zur Herstellung eines impedometrischen Sensors mit zwei beabstandeten insbesondere flächigen Leitern, wobei in einen Meßraum zwischen die Leiter ein zu untersuchender insbesondere in flüssiger Lösung befindlicher Analyt einbringbar ist, der die Kapazität des durch die Leiter gebildeten Kondensators meßbar verändert. Die Erfindung betrifft gleichfalls den impedometrischen Sensor selber, der zum qualitativen und/oder quantitativen Nachweis spezifischer Moleküle dient.

Derartige Sensoren, insbesondere zum selektiven Nachweis von Biomolekülen wie beispielsweise von Antikörpern (Biosensoren), sind hinlänglich bekannt. Dabei ist es bei der Umsetzung der impedometrischen Meßverfahren jedoch ein generelles Problem, daß die durch Bindung zusätzlicher Analyt-Moleküle an der Elektrodenoberfläche verursachte Impedanzänderungen durch Änderungen der lonenkonzentration in der Trägerflüssigkeit und durch andere Störeffekte überlagert werden. Dieser Effekt beeinflußt die Empfindlichkeit des Sensors prinzipiell. Um die Empfindlichkeit solcher Sensoren zu steigern und den Einfluß der Trägerflüssigkeit zu senken, ist notwendig, die Elektroden möglichst dicht benachbart anzuordnen, die Sensoren somit zu miniaturisieren. Neben dem Wunsch einer immer weiteren Miniaturisierung besteht auf dem Gebiet der Immunosensoren oder Genosensoren ein starkes Bedürfnis nach einer Steigerung der Sensitivität und nach leichterer Handhabung der Sensoren in der Praxis.

Miniaturisierte Sensoren mit Elektrodenabständen von wenigen 100 Nanometern (nm) sind als sogenannte "Interdigitated Electrodes" (IDE's) bekannt. Zum anderen ist es bekannt, sehr dünne (Dicke von 25 Angström) und daher diskontinuierliche Pt-Schichten auf oxidierten Si-Wafern als Elektrode zu verwenden und die Änderung der Impedanz in Anwesenheit von Biomolekülen zu beobachten.

Die Nachteile der beiden Systeme liegen darin, daß die elektrischen Feldlinien eine große räumliche Ausdehnung haben und daher die Meßgröße empfindlich von der Füllstandshöhe abhängt. Außerdem ist die Kapazität bei den genannten Sensoren relativ klein, so daß präzise Messungen mit einem hohen Meßaufwand einhergehen. Der IDE-Sensor benötigt außerdem eine lithographische Strukturierung mit Strukturgrößen von weniger als 100 nm, was einen vergleichsweise hohen apparativen Aufwand bedeutet.

Aufgabe der vorliegenden Erfindung ist es, ein Verfahren zur Herstellung eines solchen Sensors zu schaffen, das sich mit einfachen Mitteln kostengünstig umsetzen läßt und die Fertigung miniaturisierter Sensoren erlaubt, wobei die Sensoren einen zuverlässigen, komfortablen und schnellen Nachweis spezifischer Moleküle ermöglichen. Zudem ist es Aufgabe der Erfindung, einen zuverlässigen und kostengünstigen Sensor insbesondere zur Durchführung des Verfahrens zu schaffen.

Diese Aufgaben werden durch das Verfahren nach Anspruch 1 und den Sensor nach Anspruch 14 gelöst.

Der Grundgedanke der Erfindung liegt darin, daß der Sensor aus einem Sandwich gefertigt wird, das als Elektroden zwei Lagen einer leitenden Schicht (Leiter) mit einer dazwischen liegenden Schicht Isolator aufweist. Solche Sandwiches können in beliebiger aber auch in besonders geringer Stärke einfach gefertigt werden, indem plane Lagen übereinander gelegt werden. Um aus dem Sandwich einen funktionsfähigen Sensor mit einem Meßraum zu fertigen, wird der Isolator teilweise zwischen den Leitern entfernt, so daß Hohlräume mit einem für den Analyten durchlässigen Zuflußkanal entstehen. Der Isolator wird jedoch derart selektiv abgetragen, daß verbleibende Teile als Abstandshalter zwischen den Elektroden verbleiben. Das Verfahren bedarf somit lediglich der Schritte, des Bedeckens eines ersten Leiters mit einer Isolierschicht, des Bedeckens der Isolierschicht mit dem zweiten Leiter und der teilweisen Zerstörung der Isolierschicht durch einen abgetragenden Prozeß, wobei ein oder mehrere Meßräume zwischen den Leitern entstehen und wobei die verbleibenden Bereiche der Isolierschicht einen Distanzhalter für die Leiter bilden. Auf diese Weise läßt sich besonders einfach eine miniaturisierte und sensible Impedanz-Meßvorrichtung zur Detektion biochemischer Moleküle herstellen. Dabei wird die Impedanz zum einen durch die Flüssigkeit in der sich die Elektroden befinden und zum anderen durch Modifikationen an den Elektrodenoberflächen beeinflußt.

Das erfindungsgemäße Verfahren respektive der Sensor zeichnen sich dadurch aus, daß die Genauigkeit der Messung nicht von der Füllstandshöhe abhängt und daß sich - wie zu beschreiben sein wird - mit einfachsten lichtoptischen lithographischen Techniken Elektrodenstrukturen mit Abständen von etwa 50 nm herstellen lassen. Um mit dem Verfahren die Miniaturisierung zu unterstützen, ist es vorteilhaft, wenn die Zerstörung des Isolators zwischen den Elektroden durch einen Ätzprozeß oder durch thermische Beaufschlagung geschieht. Derartige Prozesse werden in der Mikrotechnik eingesetzt, um kleinste Strukturen zu erzeugen.

Besonders einfach und gezielt lassen sich Sensoren kleinster Dimensionen herstellen, wenn in den ersten der beiden durch den Isolator getrennten Leiter Ausnehmungen insbesondere in Form einfacher Bohrungen eingebracht werden, die bis zum Isolator reichen und durch die hindurch dieser lokal, nämlich am Ort der Bohrung, von einer Seite mit einer ätzenden Substanz beaufschlagt werden kann. Um auf einfache Weise eine Vielzahl systematisch angeordneter Bohrungen in den Leiter einbringen zu können, ist es vorteilhaft, sich dabei eines Ätzprozesses, insbesondere dem Prozeß des lonenstrahlätzens zu bedienen. Dieser kann vermittels bekannter lithographischen Verfahren durchgeführt werden. Es kann jedoch auch vorteilhaft sein, die Bohrungen durch thermische Beaufschlagung, beispielsweise durch einen Laserstrahl, einzubringen.

Die beabsichtigten besonders kleinen Dimensionen respektive Plattenabstände lassen sich dadurch erreichen, daß der erste Leiter nicht von einem massiven Blech, sondern von einer Metallschicht gebildet wird, wobei das Metall der Schicht im atomaren Zustand auf eine stabile Trägerschicht aufgebracht wird. Als Möglichkeiten des Auftragens bieten sich bekannte Verfahren des PVD oder CVD (Physical oder Chemical Vapour Deposition) an. Auf diese Art kann eine Metallschicht erzeugt werden, die eine Stärke kleiner einem Mikrometer und insbesondere zwischen 100 nm und 300 nm aufweist. Aus fertigungstechnischen Gründen ist es vorteilhaft, wenn die Metallschicht aus zwei Lagen verschiedener Atome aufgebaut ist. Um eine gute Haftung auf dem Träger, der vorteilhafter Weise ein Silizium Wafer ist, zu erhalten, ist es vorteilhaft zunächst eine Schicht aus Chrom aufzubringen, die nachfolgend mit einer Schicht aus Gold bedeckt wird. Als Edelmetall gewährleistet das Gold eine hohe Resistenz gegen Angriffe mit Säure und gegen natürliche Oxidierung. Über die Goldschicht läßt sich der Sensor gut und zuverlässig kontaktieren. Zudem bietet die Goldschicht die Möglichkeit standardverfahren zur Imobilisierung der Rezeptoren einzusetzen.

Außerdem ist es im Hinblick auf die Miniaturisierung vorteilhaft, die Isolierschicht ebenfalls mit Methoden der Dünnschichttechnik auf den Leiter aufzubringen. Die Aufbringung kann gleichfalls durch PVD oder CVD geschehen, wobei sich Schichten der Stärke zwischen 50 nm und 150 nm erzeugen lassen. Diese Schichtdicke bestimmt beim späteren Sensor den Abstand der Elektroden. Eine solch geringe Stärke von etwa 50 nm ist im Hinblick auf das zuvor Gesagte daher besonders vorteilhaft. Dem Konstruktionsprinzip folgend ist es vorteilhaft, wenn der zweite Leiter ebenfalls in Dünnschichttechnik auf die Isolierschicht aufgebrachten Metallschicht gebildet wird, wobei das Metall insbesondere mit PVD oder CVD aufgebracht wird. Um die Vorteile lithographischer Verfahren nutzen zu können, ist es zu bevorzugen, wenn auf die zweite Metallschicht ein Photolack aufgetragen wird. Dieser kann dann beispielsweise vermittels einer Maske an bestimmten Stellen belichtet werden, wobei sich die belichteten Stellen durch Entwicklung im lithographischen Verfahren abtragen lassen.

Der besonders erfindungswesentliche Schritt, die Isolierschicht gezielt zu zerstören, wird vorteilhafter Weise dadurch eingeleitet, daß durch die in den Photolack eingebrachten Ausnehmungen hindurch mit einem Trockenätzverfahren, insbesondere mit einem hochenergetischen Ar-Strahl, in die zweite Metallschicht Kanäle eingebracht werden, die bis zu der Isolierschicht reichen. Die Kanäle bilden Zugänge kleiner Dimension, durch welche die Isolierschicht zugänglich ist. Das atomare Argon bewirkt als Edelgas keine Reaktionen mit dem Material des Sensors. Durch die als Kanäle ausgebildeten Zugänge hindurch läßt sich die Isolierschicht gezielt rund um die Mündung des Kanals herum abtragen. Dabei ist es vorteilhaft, das Abtragen durch einen Ätzprozeß vorzunehmen, wobei eine flüssige Säure, insbesondere Flußsäure, zur Beaufschlagung der Isolierschicht verwendet wird. Die Reaktion der Säure mit dem Isolator geschieht gleichmäßig in einem Kreis um die Mündung herum. Um das Reaktionsverhalten und die Ausbreitungsgeschwindigkeit kennen zu lernen, kann die Verteilung unter dem Mikroskop beobachtet werden. Da die Reaktion bei gleichen Verhältnissen immer konstant abläuft, kann sie innerhalb des Herstellungsprozeßes unbeobachtet und automatisiert erfolgen. Zum richtigen Zeitpunkt, wenn genügend (aber noch nicht zu viel) Isolationsmaterial abgetragen ist, wird die Reaktion durch Neutralisierung in einem Auswaschprozeß gestoppt. Es sind dann noch genügend Bereiche der Isolierschicht vorhanden, die für die Leiter als Distanzhalter verbleiben.

Um Biomoleküle (Analyten) in einer Trägerflüssigkeit selektiv zu untersuchen, ist es vorteilhaft, den oder die Leiter mit Rezeptoren zu beschichten, die einen Analyten spezifisch binden. Diese Vorgehensweise ist an sich bekannt. So werden beispielsweise Antigene auf die Leiter aufgetragen, um spezielle Antikörper zu binden. Mit der vorliegenden Erfindung ist somit ein quantitativer Nachweis eines in einer Flüssigkeit befindlichen Analyten möglich.

Wird Wasser als Trägerflüssigkeit verwendet, ergeben sich z.B. für laterale Sensorabmessungen von 10 µm * 10 µm Kapazitäten in der Größenordnung von 100pF. Die zu erwartenden Änderungen der Impedanzen liegen, je nach dem verwendeten Rezeptor-Analyt-System im Bereich von 0,1% - 5%. Die Auswertung der Impedanzänderung kann somit ohne aufwendige Meßbrücken mit einer ausreichenden Genauigkeit von etwa 0,5% erfolgen. Hierzu wird das Sensorelement beispielsweise über einen Widerstand mit einer hochfrequenten Wechselspannung beaufschlagt und die über den Sensor abfallende Spannung wird - gegebenenfalls phasensensitiv - gemessen.

Das erfindungsgemäße Verfahren zeichnet sich durch eine einfache Handhabung und eine hohe Zuverlässigkeit aus. Das Verfahren und die das Verfahren umsetzende Vorrichtung sind besonders für standardisierte Reihenuntersuchungen geeignet und bringen qualitative aber auch quantitative Ergebnisse hoher Genauigkeit. Der so konzipierte Sensor ist kostengünstig und trägt so zu einer hohen Akzeptanz der damit möglichen Untersuchungen im Markt bei.

Die Erfindung wird im folgenden anhand der Figuren 1 bis 3 näher beschrieben. Es zeigen:
- **Figur 1**: das Sandwich eines Sensors vor dem Abtragen des Isolators,
- **Figur 2**: das Sandwich eines Sensors nach dem Abtragen des Isolators und
- **Figur 3**: eine Draufsicht auf den Ausschnitt eines Sensorarrays.

Generell erfolgt die Herstellung des Sensors durch Beschichtungstechnologien und Lithographieprozesse auf Substraten wie z.B. Silizium oder Glas. Die prinzipielle Struktur und deren Herstellung sei nachfolgend dargestellt:

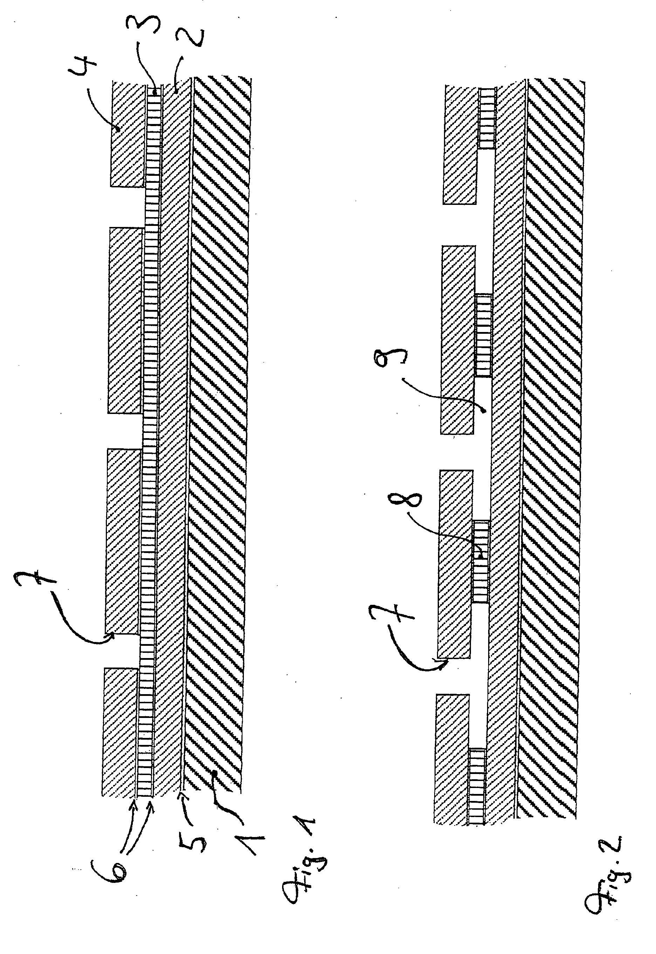

Auf ein elektrisch nichtleitendes Substratmaterial 1, das hier von einem oxidierten Silizium- Wafer gebildet ist, wird zunächst durch Sputtern eine Schichtfolge aus einer ersten leitenden Schicht 2, einer Isolationsschicht 3 und einer zweiten leitenden Schicht 4 aufgebracht. Die leitenden Schichten 2 und 4 werden in diesem Fall von Goldschichten gebildet. Vor dem Aufbringen der Goldschicht 2 wird als Haftvermittler eine Schicht Chrom 5 auf den Waver 1 aufgebracht. Eine solche Chromschicht 6 bedeckt das Gold 2 gegen den Isolator 3, der hier von einer SiO₂ Auflage von etwa 50 nm Stärke gebildet wird. Eine Chromschicht 6 ist gleichfalls als Haftvermittler zwischen dem Isolator 3 und der Goldschicht 4 angeordnet. Im Anschluß wird eine nicht dargestellte Photolackmaske aufgebracht und in einem ersten Lithographieschritt wird die obere Goldschicht 4 durch einen gerichteten Ätzprozess strukturiert, so daß Öffnungen 7 in einem Abstand von 5-10 µm entstehen. Figur 1 zeigt dieses Fertigungsstadium. Zum Ätzen wird in diesem ersten Schritt ein nichtreaktives lonenstrahlätzen mit einem Ar-Strahl eingesetzt.

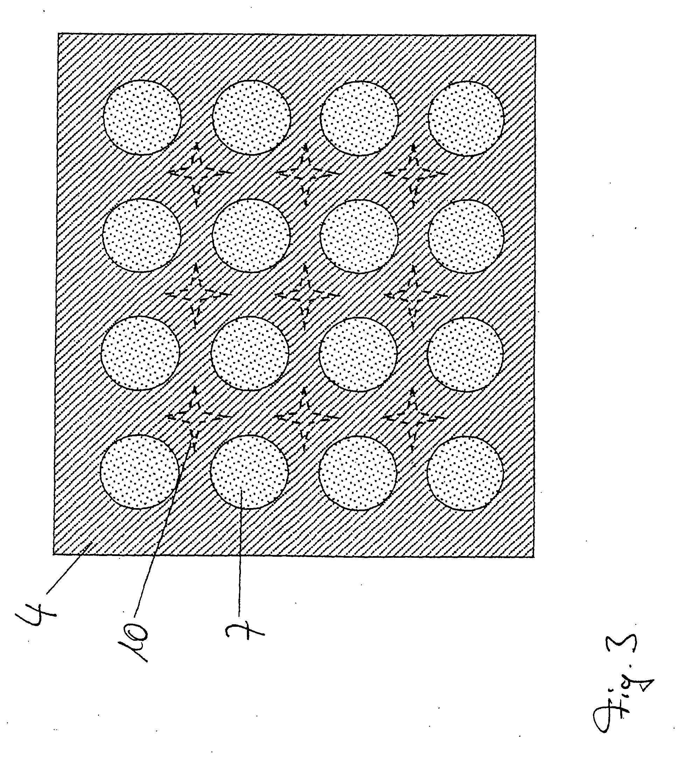

Anschließend wird mit einem isotropen Ätzprozess das Isolatormaterial 3 durch die Öffnungen 7 weggeätzt, so daß kleine Stege bzw. Pfeiler 8 zur Stützung der leitenden Schichtstruktur stehen bleiben (Figur 2). Dieser Ätzprozeß ist ein naßchemisches Ätzen mit Flußsäure, wobei abschließend Ammonium-Cer-Nitrat für die naßchemische Entfernung des Cr verwendet wird. Die Kavitäten 9 dienen nunmehr als Meßzelle. Über die Goldschichten 2 und 4 wird der Sensor kontaktiert. Dazu werden die Au-Leiter 2 und 4 in geeigneter Weise nach außen geführt, um eine Kontaktierung mit der Elektronik zu ermöglichen.

Figur 3 zeigt eine Aufsicht auf einen solchen Sensor mit einer Vielzahl von Ausnehmungen 7 in einer Goldschicht 4, wobei die verbleibenden aus Isolator bestehenden Stützstege 10 zu erkennen sind. Bei diesem Array bildet jede Ausnehmung einen Zugang zu der Meßzelle.

## Patentansprüche

1. Verfahren zur Herstellung eines impedometrischen Sensors mit zwei beabstandeten insbesondere flächigen Leitern (2,4), wobei in einen Meßraum (9) zwischen die Leiter (2,4) ein zu untersuchender insbesondere in flüssiger Lösung befindlicher Analyt einbringbar ist, der die Impedanz des Sensors verändert,
**dadurch gekennzeichnet, daß**
- der erste Leiter (2) mit einer Isolierschicht (3) bedeckt wird,
- die Isolierschicht (3) mit dem zweiten Leiter (4) bedeckt wird und
- die Isolierschicht (3) durch Zerstörung teilweise abgetragen wird, wobei ein oder mehrere Meßräume (9) zwischen den Leitern (2,4) entstehen und wobei die verbleibenden Bereiche der Isolieschicht (3) einen Distanzhalter (8) für die Leiter (2,4) bilden.

2. Verfahren nach Anspruch 1,
**dadurch gekennzeichnet, daß** die Zerstörung durch einen Ätzprozeß oder durch thermische Beaufschlagung hervorgerufen wird.

3. Verfahren nach Anspruch 1 oder 2,
**dadurch gekennzeichnet,** daßindenzweitenLeiter(4) Ausnehmungen (7) eingebracht werden, duch die hindurch die Isolierschicht (3) lokal mit einer ätzenden Substanz beaufschlagt wird.

4. Verfahren nach Anspruch 3,
**dadurch gekennzeichnet, daß** die Ausnehmungen (7) durch einen Ätzprozeß, insbesondere durch lonenstrahlätzen oder durch thermische Beaufschlagung, eingebracht werden.

5. Verfahren nach einem der vorherigen Ansprüche,
**dadurch gekennzeichnet,** daßderersteLeiter(2)voneiner Metallschicht gebildet wird, wobei das Metall im atomaren Zustand auf eine Trägerschicht (1), insbesondere auf einen Silizium Wafer, aufgebracht, insbesondere aufgedampft oder aufgesputtert, wird.

6. Verfahren nach Anspruch 5,
**dadurch gekennzeichnet, daß** die Metallschicht von einer unteren Schicht aus Chrom (5) mit einer darauf liegenden Schicht aus Gold (2) gebildet wird.

7. Verfahren nach Anspruch 5 oder 6,
**dadurch gekennzeichnet, daß** die Metallschicht eine Stärke zwischen 100 nm und 300 nm aufweist.

8. Verfahren nach einem der vorherigen Ansprüche,
**dadurch gekennzeichnet, daß** die Isolierschicht (3) im atomaren Zustand auf den Leiter aufgebracht, insbesondere aufgedampft oder aufgesputtert, wird und insbesondere eine Stärke zwischen 50 nm und 150 nm aufweist.

9. Verfahren nach Anspruch 8,
**dadurch gekennzeichnet,** daßderzweiteLeiter(4)von einer Metallschicht gebildet wird, wobei das Metall im atomaren Zustand auf die Isolierschicht (3) aufgebracht, insbesondere aufgedampft oder aufgesputtert, wird.

10. Verfahren nach Anspruch 9,
**dadurch gekennzeichnet, daß** auf die zweite Metallschicht (4) ein Photolack aufgetragen und vermittels einer Maske an bestimmten Stellen belichtet wird, wobei die belichteten Stellen im lithographischen Verfahren abgetragen werden.

11. Verfahren nach Anspruch 10,
**dadurch gekennzeichnet, daß** durch die in den Photolack eingebrachten Ausnehmungen hindurch in die zweite Metallschicht mit einem Trockenätzverfahren, insbesondere mit einem hochenergetischen Ar-Strahl, Kanäle (7) eingebracht werden, die bis zu der Isolierschicht (3) reichen.

12. Verfahren nach Anspruch 11,
**dadurch gekennzeichnet, daß** durch die Kanäle (7) hindurch die Isolierschicht (3) in einem Ätzprozeß teilweise abgetragen wird, wobei eine flüssige Säure, insbesondere Flußsäure, zur Beaufschlagung der Isolierschicht (3) verwendet wird.

13. Verfahren nach Anspruch 12,
**dadurch gekennzeichnet,** daßderÄtzprozeßdurch Neutralisation der Säure gestoppt wird, solange noch Bereiche der Isolieschicht als Distanzhalter (8) für die Leiter (2,4) verbleiben.

14. Verfahren nach einem der vorherigen Ansprüche,
**dadurch gekennzeichnet,** daßderoderdieLeitermit Rezeptoren beschichtet sind, die einen Analyten spezifisch binden.

15. Impedometrischer Sensor zum qualitativen und/oder quantitativen Nachweis spezifischer Moleküle, insbesondere zur Durchführung des Verfahrens nach einem der Ansprüche 1 bis 15, aufweisend mindestens eine Meßzelle (9), die zwischen zwei Flächenelektroden (2,4) angeordnet ist, wobei der Abstand der Elektroden kleiner als ein Mikrometer ist,
**dadurch gekennzeichnet**,daßindieeinederbeiden Flächenelektroden (4) mindestens eine Ausnehmung zur Einbringung des Analyten eingebracht ist, daß zwischen den beiden Flächenelektroden ein Isolator (3) angeordnet ist, daß der Isolator (3) an dem Ort der Ausnehmung eine Kavität (9) aufweist, deren in Bezug auf die Elektroden vertikale Ausdehnung der Kavität größer als der Durchmesser der Ausnehmung ist, so daß die Kavität die eine Flächenelektrode untergräbt.

16. Vorrichtung nach Anspruch 15,
**gekennzeichnet durch** einen Vielzahl von Ausnehmung, die jeweils einen Zugang zu der Meßzelle (9) bilden.
